(19) Europäisches Patentamt / European Patent Office / Office européen des brevets

(11) **EP 2 422 866 B1**

(12) **EUROPEAN PATENT SPECIFICATION**

(45) Date of publication and mention
of the grant of the patent:
**14.10.2015 Bulletin 2015/42**

(21) Application number: **10767056.4**

(22) Date of filing: **20.04.2010**

(51) Int Cl.:
*D21H 13/10* (2006.01)  *D21H 13/40* (2006.01)
*D21H 27/08* (2006.01)  *B01D 39/16* (2006.01)
*B01D 39/20* (2006.01)

(86) International application number:
**PCT/JP2010/057005**

(87) International publication number:
**WO 2010/122999 (28.10.2010 Gazette 2010/43)**

(54) **LOW-BASIS-WEIGHT FILTER MEDIA FOR AIR FILTERS**

FILTERMEDIEN MIT GERINGER GRAMMATUR FÜR LUFTFILTER

MILIEU FILTRANT À FAIBLE GRAMMAGE POUR FILTRES À AIR

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **24.04.2009 JP 2009106738**

(43) Date of publication of application:
**29.02.2012 Bulletin 2012/09**

(73) Proprietor: **Hokuetsu Kishu Paper Co., Ltd.**
**Nagaoka-shi**
**Niigata 940-0027 (JP)**

(72) Inventors:
• **SOYAMA Toshihiko**
**Nagaoka-shi**
**Niigata 940-0027 (JP)**
• **SATO Masashi**
**Nagaoka-shi**
**Niigata 940-0027 (JP)**

(74) Representative: **Michalski Hüttermann & Partner**
**Patentanwälte mbB**
**Speditionstraße 21**
**40221 Düsseldorf (DE)**

(56) References cited:
JP-A- 1 014 399    JP-A- 2 243 126
JP-A- 9 070 512    JP-A- 11 047 522
JP-A- 11 188 212    JP-A- 60 025 521
JP-A- 60 190 211    JP-A- 62 110 719
JP-A- 62 140 615    JP-A- 62 191 015
JP-A- 2001 218 712    JP-A- 2002 085 918
JP-A- 2004 017 041    JP-A- 2004 160 361
JP-A- 2006 055 735    JP-A- 2008 000 652
JP-A- 2008 246 321    JP-T- 2008 518 772
US-A- 3 622 445

• **DATABASE WPI Week 198726 Thomson
Scientific, London, GB; AN 1987-181367
XP002694119, & JP 62 110718 A (KURARAY CO
LTD) 21 May 1987 (1987-05-21)**

EP 2 422 866 B1

**Description**

TECHNICAL FIELD

The present invention relates to a filter medium for air filters, and specifically relates to a filter medium for semi-high performance air filters or filter medium for high performance air filters, which is used for filtering microparticles in gases, in air filters for use in air cleaning facilities such as clean rooms and clean benches relating to semiconductor, liquid crystal, bio and foodstuff industries, air filters for use in air conditioning of buildings air filters for use in air cleaners, or the like.

BACKGROUND ART

In order to efficiently collect particles of from submicron to micron scale in the air, a collecting technique by an air filter has been conventionally used. Air filters are roughly classified into rough filters, middle-performance filters, semi-high performance filters, high performance filters (HEPA filters, ULPA filters) and the like depending on the difference in the intended particle diameter and dust removal efficiency of the filters.

Among these, as the specification of semi-high performance filters and high performance filters, the European Standard EN 1822 is exemplified. EN 1822 is roughly classified into seven steps from U16 to H10 according to degrees of collection efficiency at the maximum permeation particle size (MPPS). Other examples of the standards of high performance filters include IEST-RP-CC001 in the United States, JIS Z 4812:1995, "High Performance Air Filters for Use in Radioactive Aerosols" in Japan, and the like. Furthermore, as filter media that are used in semi-high performance filters and high performance filters, those satisfy these specifications as air filters are used. As a material for a filter medium, filter media for use in air filters made of non-woven fabric-like glass fibers are frequently used, and as a main constitutional material, glass short fibers having an average fiber diameter of from submicrometers to about 3 micrometers are used.

Furthermore, filter media for use in air filters that are used in clean rooms are provided with water repellency as necessary. The water repellency in the present invention is one defined by the measurement method of MIL-STD-282. The purposes of imparting water repellency to a filter medium is, for example, to prevent penetration of a sealing agent, a hot-melt and the like that are used during processing of the filter medium, to make the filter medium possible to be used as it is even when moisture is condensed due to the change in temperature, and the like. Furthermore, it is considered that a filter medium having high water repellency is required for preventing deliquescence of salinity under an environment in which much particles of sea salt are present.

A filter medium for air filters is folded into a zigzag shape by using a pleat converter so as to increase a filtering surface area, and housed in a frame made of aluminum, wood, a resin or the like to give an air filter unit. Although a standard size of an air filter unit is vertical $\times$ horizontal of 610 mm $\times$ 610 mm, the size varies depending on the purpose of the air filter unit. Furthermore, the depth of the air filter unit also varies.

Examples of prior arts relating to a filter medium for air filters include the following ones. As an improvement strategy for improving the strength of a filer medium for air filters composed of glass fibers, a filter medium composed of glass fibers having a specific fiber diameter, polypropylene fibers, polyolefin type composite fibers containing a thermoplastic component as a part thereof, and vinylon binder fibers that are a long chain synthetic polymer containing 65% by weight or more of vinyl alcohol units having a water dissolving temperature of from 50 to 100°C, wherein the incorporation percentage of the glass fibers in the filter medium of from 0.5 to 20% by weight and the incorporation percentage of the vinylon binder fiber is from 0.5 to 10% by weight, and a method for producing the same, were suggested (see, for example, Patent Document 1). Furthermore, a filter medium for air filters, which is composed of 60 to 97% by weight of ultrafine glass fibers each having a diameter of 4 $\mu$m or less, thin-denier polyvinyl alcohol type fibers of 0.05 to 0.5 denier and 0 to 7% by weight of a polyvinyl alcohol-based fibrous binder, and has a basis weight of from 25 to 150 g/m$^2$, was suggested (for example, see Patent Document 2).

Furthermore, a filter medium for bag filters containing a filtering layer in which fine synthetic fibers of 5 $\mu$m or less and glass fibers of 1 $\mu$m or less have been mixed together with a fiber binder by a wet papermaking method, and a strength-maintaining layer that is attached to the filtering layer and supports and reinforces the filtering layer, and the filter medium for bag filters restores its filtration function by brushing off collected dust adhered on the surface by regurgitating air by blowing the air in the direction opposite to the general direction of passage when dust in air is filtered, was suggested (for example, see Patent Document 3).

In the past, the present inventors have provided a filter medium for air filters obtained by attaching an organic type binder, a polyisocyanate compound and a water repellent to glass fibers that constitute a filter medium, and a method for producing the same, in order to improve the strength and water repellency of the filter medium, and to decrease pressure loss and improving collection efficiency as compared to conventional filter media (for example, see Patent Document 4).

Furthermore, as conventional methods for imparting water repellency to filter media for air filters containing glass fibers as major fibers, use of a water repellent composed of a silicone type resin (for example, see Patent Document 5), or use of a water repellent composed of a fluorine type resin (for example, see Patent Document 6) has been performed. In the past, the present inventors also suggested a filter medium for air filters formed by attaching an alkylketene dimer to the surface of glass fibers (for example, see Patent Document 7), and a filter medium for air filters that generates little outgas, which is formed by attaching to the surface of the above-mentioned glass fibers a condensed product that is obtained by hydrolyzing an alkoxysilane having at least three or more alkoxy groups in a molecule and condensing the product, as a water repellent that does not generate organic outgas containing mainly a low-molecule cyclic siloxane (for example, see Patent Document 8).

PRIOR ART DOCUMENTS

PATENT DOCUMENT

Patent Document 1: JPH0820641

Patent Document 2: JPH060013082B

Patent Document 3: JPA08243321

Patent Document 4: JPH09225226

Patent Document 5: JPH0241499

Patent Document 6: JPS6290395

Patent Document 7: WO026005

Patent Document 8: JP2007029916

SUMMARY OF INVENTION

PROBLEMS TO BE SOLVED BY THE INVENTION

In recent years, an air filter unit of a type having a thin depth is desired for the purpose of weight saving and downsizing of an air filter unit; however, there was a problem that when one intends to house a pleated filter medium having the same filtering surface area into a unit, the pleated surfaces of the filter medium contact with each other due to the thickness of the filter medium to cause structural resistance, whereby the pressure loss of the air filter unit is increased significantly.

In order to solve the problem, there is an attempt to decrease the thickness, i.e., to decrease the basis weight of a filter medium for air filters. However, a filter medium made of glass fibers is brittle as compared to other filter media of organic materials. Therefore, the basis weight of a filter medium is generally adjusted to about from 60 to 80 $g/m^2$; however, there was a problem when one attempts to adjust it to 50 $g/m^2$ or less, the strength of the filter medium is decreased by doing so, whereby the filter medium becomes easy to be broken during pleat processing and practical use as an air filter. Furthermore, there was also a problem that the water repellency of the filter medium is also decreased due to the decrease in the basis weight of the filter medium.

According to the studies by the present inventors, it was found that the above-mentioned breaking of the filter medium is deeply affected by the internal tearing strength of paper as defined in JIS P 8116:2000 "Paper-Method for Testing Internal Tearing Strength-Elmendorf Tearing Tester Method", and also found that breakage occurs easily since the internal tearing strength is decreased in accordance with the decreased in the basis weight. Furthermore, it was also found that the water repellency is decreased since the thickness of the filter medium is decreased and water penetrates more easily in accordance with the decrease in the basis weight.

In the past, there was the technique of Patent Document 1 or 2 as a strategy for improving the strength of a filter medium for air filters made of glass fibers. However, the technique had problems that, although an effect of improving tensile strength is observed in the Examples of said patent literature, the internal tearing strength of the filter medium is not improved, little effect is exhibited on breakage of the filter medium during pleat processing or practical use, and no effect of improving water repellency is exhibited.

Furthermore, the technique relating to a strength-maintaining layer in Patent Document 3 has problems that a special equipment is required for binding the strength-maintaining layer to the filtering layer, the binding surface between the filtering layer and the strength layer is readily peeled, and no improvement of water repellency is observed.

Furthermore, it was difficult to make up for the decrease in the strength of the filter medium and the decrease in the water repellency of the filter medium due to the decrease in the basis weight even the technique of Patent Document 4 that was provided by the present inventors was used; specifically, improvement of internal tearing strength could be expected little.

In addition, although there are the techniques of Patent Documents 5 to 8 for water repellency, they treated the surface of glass fibers by using a reagent having water repellency, and have problems not only that it is necessary to increase the use amount of the reagent significantly so as to make up for the decrease in water repellency in accordance with decrease of the basis weight and high costs are required, but also that the improving effect by an adhesion amount is plateaued. Furthermore, there is also a problem that improvement of internal tearing strength is not observed even the adhesion amount of the reagent is increased.

As mentioned above, the techniques of Patent Documents 1 to 8 were not drastic measures against the decrease in the basis weight of the filter medium. Therefore, the problem of the present invention is to improve a problem of the decrease in internal tearing strength and water repellency in accordance with the decrease in the basis weight of a filter medium for air filters, and to provide a filter medium for air filters that can also address demands for flame retardancy.

MEANS FOR SOLVING THE PROBLEMS

The present inventors have done intensive studies and found that the above-mentioned problems can be solved by using glass short fibers and short fibers of hydrophobic chemical synthetic fibers each having a fiber diameter of 5 $\mu$m or less as raw material fibers of a filter medium, and fixing the fibers by a hydrophobic synthetic resin type binder, and completed the present invention. That is, a low-basis-weight filter medium for air filters according to the present invention is characterized by: glass short fibers (A) and short fibers of hydrophobic chemical synthetic fibers each having a fiber diameter of 5 $\mu$m or less (B) by a mass ratio (A/B) in the range of from 70/30 to 95/5, as raw material fibers of the filter medium; a hydrophobic synthetic resin-based binder is added by 3 to 10 parts by mass with respect to 100 parts by mass of the raw material fibers; and a basis weight of from 25 g/m$^2$ or more to 50 g/m$^2$ or less.

In the low-basis-weight filter medium for air filters according to the present invention, the mass ratio (A/B) is in the range of from 78/22 to 95/5, and the filter medium for air filters preferably satisfies the combustion classification class 3 of a combustion test that conforms with the Guidance of Combustion Test Methods on Filter Media for Air Cleaning Apparatuses JACA No. 11A-2003. Flame retardancy is imparted by adjusting the mass ratio (A/B) to the range from 78/22 to 95/5. Conforming with the Guidance of Combustion Test Methods on Filter Media for Air Cleaning Apparatuses JACA No. 11A-2003 means the following:

(1) The afterflame time of four test specimens among five test specimens is 2 seconds or shorter.

(2) The afterflame time of the entire test specimens is 10 seconds or shorter.

(3) The combustion distance of the entire test specimens is 35 mm or less.

(4) The test specimen does not ignite the labeling cotton placed under 175 $\pm$ 25 mm by melt drips in the entire test specimens.

(5) The afterglow time of the entire test specimens is 30 seconds or shorter.

When one of the five test specimens does not satisfy the above-described requirements, the test is performed again by the five test specimens. If the entire test specimens tested are not suitable for the requirements again, they are not suitable for the corresponding class.

Definitions of major terms used in document JACA No. 11A-2003 are as follows:

a) Flammability: Possibility that a test specimen combusts with a flame or without a flame in specified test conditions.

b) Afterflame: A phenomenon in which the test specimen continues to generate the flame even after removal of an ignition source in the specified test conditions.

c) Afterglow: A phenomenon in which a flame does not occur after removal of the ignition source or a glowing combustion of the test specimen after disappearance of flame is sustained in the specified test conditions.

d) Afterflame time: A time (seconds) at which the test specimen continues to generate a flame even after removal of the ignition source in the specified test conditions.

e) Afterglow time: A time (seconds) of continuing to sustain the glowing combustion of the material, after removal of the ignition source or after disappearance of the flame, in the specified test conditions.

f) Damage: Permanent influence of the test specimen affected by thermal factors in the specified test conditions. Loss, contraction, combustion, softening, melting, carbonization pyrolysis or the like of the material.

g) Damaged length: A maximum length due to permanent influence of the test specimen affected by thermal factors in the specified test conditions.

h) Glowing (noun) : A status of being burnt by a solid layer of the test specimen along with the emission of light from a combustion zone, without emitting the flame.

i) Ignition source: An energy source that is used to ignite a material or a product.

j) Ignition time: A defined time (seconds) at which the test specimen is exposed to the ignition source regardless of presence or absence of the ignition.

k) Melt drip: A phenomenon in which a molten substance falls and drops regardless of the form of combustion.

l) Down stream side: A surface that is a downstream side of the air flow when used as a filter.

The measurement principle is as follows: A test specimen is horizontally placed on a support wire mesh of 6.4 mm mesh in a combustion test device, and a terminal of the test specimen is exposed to the flame of the specified test conditions for 60 seconds. In the test, whether the flame disappears, the time required until the flame disappears, or the time required for flame to pass a certain distance is measured.

The combustion test device has an internal volume of 0.5 $m^3$ or more. A fire-resistant observation window is provided on the front surface or the side surface of the combustion test device. The observation window may be fixed to the front, and may be movable. A draft does not enter during the combustion test. Furthermore, as long as the above-described conditions are satisfied, the combustion test can be carried out within a draft hood.

One end of a plain-woven wire mesh (length of 215 mm, and width of 75 mm) is used by being bent to a right-angle upward direction by 13 mm. The mesh is 6.4 mm mesh that uses a low-carbon steel wire or a stainless steel wire having a diameter of 0. 90 $\pm$ 0.05 mm.

A metallic support device capable of holding the support wire mesh and equipped with a height-adjusting device capable of coping with variations in the height of the burner is used. An angle in the length direction of the wire mesh is maintained within 1° from the horizon. A plate is installed to put a labeling cotton below 175 $\pm$ 25 mm from the lower surface of the support wire mesh. •A front end of the test specimen support device is spaced from the end of the combustion chamber by 50 mm or more, and a longitudinal side thereof is spaced from the side wall of the combustion chamber by 50 mm or more.

A gas burner having a length of a cylindrical portion 100 $\pm$ 10 mm and an inner diameter of 9.5 $\pm$ 0.3 mm is used. An internal dimension of the nozzle opening is 48 $\pm$ 1 mm, and an internal width thereof is 1.3 $\pm$ 0.05 mm. As a use gas, methane gas of industrial grade (purity of 98% or more and calorific value of 37 $\pm$ 1 MJ/$m^3$) is used. A regulator for providing a constant flow rate of the gas and a meter are provided. Two timing devices capable of measuring down to one second and a scale having a JIS 1 grade 1 mm scale are used. All tests are performed under an environment of a temperature of 15 to 35° C and a relative humidity of 45 to 75%. A desiccator containing anhydrous calcium chloride or another desiccant is prepared, and it is possible to maintain a status of a temperature of 23 $\pm$ 2° C and a relative humidity of less than 20%.

A test specimen has a length of 150 $\pm$ 5 mm, a width 50 $\pm$ 1 mm, and a thickness of 13 mm or less. The test specimens are collected from a sample capable of representing the material, and four pairs consisting of a set of five test specimens are collected. The down stream surface is placed upward, three horizontal lines are filled at the positions of 25 mm, 60 mm and 125 mm from the end portion of the test specimen, and are used as the marked lines.

State adjustment of two pairs (five test specimens $\times$ 2) is performed at the relative temperature of 23 $\pm$ 2° C and 50 $\pm$ 5% for 48 hours. Two pairs (5 test specimens $\times$ 2) are subjected to pre-treatment at 70 $\pm$ 1° C for 168 hours, and are cooled within a desiccator at room temperature for 4 hours or longer. However, it possible to omit a test specimen having no hygroscopicity. A sufficient amount of pharmacopoeia absorbent cotton for testing is prepared, state adjustment is performed in a desiccator (5.9) before use for 48 hours or longer and is used as the labeling cotton.

A clean support wire mesh is set on the test specimen support device, and is adjusted so that a lower end of the test specimen is located on $13 \pm 1$ mm of the wing tip of the burner. When the test specimen is placed, the positions of the burner and the support device are adjusted so that one end of the flame matches one end of the test specimen. The center of the wing tip of the burner is adjusted to be just below the center line in the length direction of the test specimen.

The labeling cotton of 0.08 g is taken out from the desiccator, and thinly spread on the test specimen support device by hand to a dimension of approximately 75 mm $\times$ 75 mm and a thickness of 6 mm or less. The position is aligned to the leading end of the support wire mesh that is bent at a right angle.

The test specimen is placed on the test specimen support device as follows: A surface with a marked line drawn thereon faces upward. • An end closer to the marked line indicating 60 mm is in contact with the portion that is folded upward 13 mm from the support wire mesh. A longitudinal axis of the test specimen is parallel to a longitudinal axis of the support wire mesh. •

Adjustment of the burner fitted with the wing tips is performed at a position that is sufficiently spaced from the test specimen. After ignition, an amount of gas supply and an amount of air are adjusted so that a blue flame is obtained in which the height of flame is $38 \pm 1$ mm and yellow remains at the leading end of flame. Further, the amount of air is increased and is finely adjusted so that the yellow flame is completely eliminated. The height of flame is measured from the highest section of the curved wing tip.

The burner is quickly moved to a predetermined position, and the first timing device is started. A predetermined position is a position at which a center of the wing tip attached to the burner is located below $13 \pm 1$ mm from the lower surface of the support wire mesh, and an end portion of the support wire mesh which is bent at a right angle and the wing tip are located on the same line as viewed from the top.

It is desirable that the burner can be operated so as to be able to be easily set at a predetermined position from the outside of the combustion test device. After applying the flame to the test specimen for $60 \pm 1$ seconds, the burner is spaced from the test specimen to a sufficient distance. • Measurement of the afterflame time and the afterglow time starts in the first timing device at the same time. In a case where the flame reaches the marked line of 25 mm, even during contact flame of $60 \pm 1$ seconds and even if the test specimen burns on the lower side, the upper side and the corner side, the measurement of combustion time starts in the second timing device. • When the leading end of the damaged portion, such as afterflame or afterglow combustion, reaches the marked line of 60 mm, or when the combustion of the test specimen stops before the leading end reaches the marked line of 60 mm, the first timing device stops. When the leading end of the damaged portion, such as afterflame or afterglow combustion, reaches the marked line of 125 mm, or when the combustion of the test specimen stops before the leading end reaches the marked line of 125 mm, the second timing device stops.

It is observed whether the labeling cotton is ignited by the melt drip. When the melt drip falls into the burner, after stopping the test and cleaning the end of the burner and the wing tip, it is replaced with a new test specimen.

The combustion distance (Ld) is the distance between the marked line of 25 mm and the position at which the leading end of the damaged portion, such as afterflame or afterglow combustion stops, which is expressed by mm. When the leading end of the flame disappears until it reaches 25 mm of the marked line, Ld = 0 is recorded. A relation between the combustion distance and the damaged length is combustion distance = damaged length - 25 mm.

The combustion time (tb) is the time (in seconds) measured by the second timing device, after the leading end of the damaged portion, such as afterflame or afterglow combustion, passes through the marked line of 25 mm, until the leading end of the flame passes through the marked line of 125 mm or the combustion stops.

The elapsed Time (te) : is the time (in seconds) measured by the first timing device, when the test specimen is continuously subjected to the afterflame or afterglow combustion, subsequent to the contact flame of $60 \pm 1$ seconds, and the leading end of the damaged portion disappears until it reaches the marked line of 60 mm. In this case, the elapsed time (te) = afterflame time + afterglow time. •

In the case of reusing the support wire mesh, the residue remaining in the wire mesh is burnt and cleaned, and is cooled to a room temperature. After checking that the wing tip of the burner is clean, if necessary, cleaning is performed. • The status of flame is checked once for at least five tests. The tests described above are repeated.

When the leading end of the damaged portion, such as afterflame or afterglow combustion exceeds the marked line of 125 mm, the combustion velocity V is calculated by the following formula: V = 6000/tb (mm/min) wherein tb is the combustion time (s) . When the leading end of the damaged portion, such as afterflame or afterglow combustion, exceeds the marked line of 60 mm but does not exceed the marked lines of 125 mm, the combustion velocity V is calculated by the following formula: V = 60 Ld/tb (mm/min) wherein Ld is the combustion distance (mm) and tb is the combustion time (s) . An average value of the five test specimens is calculated.

In the low-basis-weight filter medium according to the present invention, a water repellent is added to the filter medium for air filters. The water repellent can be used in combination, and water repellency is imparted by doing so.

EFFECT OF THE INVENTION

In the filter medium for air filters of the present invention, the problem of the decrease in internal tearing strength and the water repellency due to the decrease in the basis weight has been improved. Regarding internal tearing strength, an internal tearing strength physical property similar to that of a filter medium having a conventional basis weight is.maintained. Furthermore, even short fibers of combustible chemical synthetic fibers are incorporated, flame retardancy that conforms with JACA No. 11A-2003 can be imparted to the filter medium.

MODES FOR CARRYING OUT THE INVENTION

Hereinafter the present invention is explained in detail with referring to the exemplary embodiments, but the present invention is not construed to be limited to these descriptions. The exemplary embodiment may be modified variously as long as it exhibits the effect of the present invention.

The low-basis-weight filter medium for air filters according to the present exemplary embodiment contains as raw material fibers of the filter medium, glass short fibers (A) and short fibers of hydrophobic chemical synthetic fibers each having a fiber diameter of 5 $\mu$m or less (B) by a mass ratio (A/B) in the range of from 70/30 to 95/5; to which 3 to 10 parts by mass of a hydrophobic synthetic resin-based binder is added with respect to 100 parts by mass of the raw material fibers; and the filter medium has a basis weight of from 25 g/m$^2$ to 50 g/m$^2$.

The basis weight in the present exemplary embodiment is from 25 to 50 g/m$^2$. When the basis weight is lower than 25 g/m$^2$, the internal tearing strength and water repellency are decreased to lower than the quality level of a filter medium having an existing basis weight. Furthermore, when the basis weight is more than 50 g/m$^2$, an effect of decreasing the thickness of the filter medium is decreased. In the present invention, the existing basis weight is defined as from 60 to 80 g/m$^2$.

The fibers used as major fibers in the present exemplary embodiment are those referred to as glass short fibers, and the glass short fibers can be freely selected from glass short fibers having various fiber diameters according to the required filtering performance and other physical properties. Specifically, the glass short fibers are wool-like glass fibers that are produced by a flame attenuation method or rotary method, and are essential components for keeping the pressure loss of the filter medium at a predetermined value to give a suitable collection efficiency. Since the collection efficiency increases as the fiber diameter decreases, it is necessary to incorporate ultrathin glass fibers having a fine average fiber diameter so as to obtain a high performance filter medium. However, since the pressure loss may sometimes increases excessively when the fiber diameter decreases, those having a suitable fiber diameter should be selected within this range. In addition, fibers having several kinds of fiber diameters may be blended and incorporated. Those having approximately 5 $\mu$m or less as a fiber diameter are used. As the glass composition, nearly all of applications for air filters are borosilicate glass, in which C glass having acid resistance and E glass having electrical insulating property (alkali-free glass) are also included. Furthermore, for the purpose of preventing boron contamination in semiconductor processes and the like, low-boron glass short fibers and silica glass short fibers can also be used. Meanwhile, the major fibers in the present exemplary embodiment refer to fibers that account for 70% by mass or more of the composition of the whole raw material fibers. In the case of the present exemplary embodiment, they mean glass short fibers.

The present inventors have done intensive studies on the countermeasures against the decrease in internal tearing strength and the decrease in water repellency in accordance with the decrease in basis weight with respect to a filter material for air filters containing the glass short fiber as a main component, and consequently found that internal tearing strength and water repellency are significantly improved by incorporating short fibers of hydrophobic chemical synthetic fibers each having a small diameter as a part of raw material fibers and by adding a hydrophobic synthetic resin binder to the filter medium.

The short fibers of hydrophobic chemical synthetic fibers are obtained by spinning a spinning liquid from a spinneret by a spinning method such as a wet spinning method, a dry spinning method, an emulsion spinning method and a melt-spinning method to give thread-like fibers, and cutting the fibers into a suitable length, and are used for various applications such as raw materials for nonwoven fabrics and cotton for futons. Of these, the short fibers of hydrophobic chemical synthetic fibers used in the present exemplary embodiment should have a small fiber diameter of 5 $\mu$m or less. When the fiber diameter exceeds 5 $\mu$m, an effect of improving internal tearing strength is exhibited little. The short fibers of hydrophobic chemical synthetic fibers each have a fiber length of, preferably from 1 mm or more to 20 mm or less, more preferably from 3 mm or more to 10 mm or less. When the fiber length is longer than 20 mm, the fibers readily cause undispersion in a step for dispersing fibers during the production of a sheet, and a finished filter medium sheet may become uneven and cause a decrease in collection performance. On the other hand, when the fiber length is shorter than 1 mm, an effect of improving internal tearing strength may be decreased.

The composition of the short fibers of hydrophobic chemical synthetic fibers may include polyester fibers, acrylic fibers, polyethylene fibers, polypropylene fibers, and the like, but is not specifically limited as long as the fibers are hydrophobic. As the composition, besides these compositions, sea-island-type fibers and split-type fibers whose diameters have been decreased by further improving the above-mentioned spinning methods, and pulp-like type chemical synthetic fibers obtained by further adding a mechanical treatment to chemical synthetic fibers can also be used. Furthermore, these fibers may be used appropriately in combination. On the other hand, vinylon fibers that are hydrophilic, rayon fibers and cellulose-based fibers that are semisynthetic fibers, and the like are not preferable since they do not have an effect of improving the internal tearing strength of the filter medium, and inhibit improvement of the water repellency.

Furthermore, since filter media for air filters containing mainly glass fibers are generally composed of a majority of inorganic materials, they have flame retardancy that conforms with the Guidance of Combustion Test Methods on Filter Media for Air Cleaning Apparatuses JACA No. 11A-2003. However, there is a fear that the flame retardancy in said test methods is not satisfied by incorporating short fibers of hydrophobic chemical synthetic fibers that are combustible into the constitution of the filter medium. Although flame retardancy is not necessarily considered to be a necessary property since the degree of requirement differs depending on the purpose of use of the filter medium, it is possible that the filter medium cannot accept the case when flame retardancy is required. One of methods may include a method of making the short fibers of chemical synthetic fibers themselves flame retardant, but it is not so preferable since it is necessary for imparting flame retardancy to add a halogen that is not preferable for environments and/or phosphorous that decreases an yield in processes for the production of semiconductors. Therefore, the present inventors have done intensive studies, and consequently found that the chemical synthetic fibers themselves do not necessarily need to have flame retardancy, by controlling the incorporation percentage of the short fibers of hydrophobic chemical synthetic fibers each having a small diameter.

The incorporation ratio of the glass short fibers (A) and the short fibers of hydrophobic chemical synthetic fibers (B) is from 70/30 to 95/5 by a mass ratio (A/B). Furthermore, the incorporation ratio is preferably from 78/22 to 95/5 by a mass ratio (A/B) so as to impart flame retardancy to the filter medium. When the incorporation percentage of the short fibers of hydrophobic chemical synthetic fibers (B) in the glass short fibers (A) and the short fibers of hydrophobic chemical synthetic fibers (B) is less than 5% by mass, the effect of improving the internal tearing strength and water repellency of the filter medium is decreased. When the incorporation percentage exceeds 30% by mass, the short fibers of hydrophobic chemical synthetic fibers disturb the network of the glass short fibers that constitute a sheet of the filter medium, whereby the collection performance of the filter medium is decreased. Furthermore, when the incorporation percentage of the short fibers of hydrophobic chemical synthetic fibers (B) in the glass short fibers (A) and the short fibers of hydrophobic chemical synthetic fibers (B) exceeds 22% by mass, the filter medium loses its flame retardancy and does not satisfy the classification class 3 of the measurement method of JACA No. 11A-2003.

Furthermore, unless the object of the present exemplary embodiment is obstructed, chopped glass fibers each having a fiber diameter of 5 $\mu$m or more that is larger than that of the glass short fibers, inorganic fibers, natural fibers each having a large diameter, short fibers of chemical synthetic fibers each having a large diameter, and the like can be incorporated as indirect materials by 15% by mass or less into the composition of the major fibers.

In order to exert the effect of the present exemplary embodiment, it is necessary to further add a hydrophobic synthetic resin type binder to the filter medium. These binders are added to the filter medium as those having a form of an aqueous solution or water type emulsion, namely, as binder liquids. Examples of the hydrophobic synthetic resin type binder may include acrylic ester type resins, urethane type resins, epoxy type resins, olefin type resins, and the like. On the other hand, starch, polyvinyl alcohol type resins and the like that are hydrophilic binders are not preferable since they do not have an effect of improving the internal tearing strength of the filter medium, and inhibit improvement of the water repellency. However, unless the object of the present exemplary embodiment is obstructed, a hydrophilic binder of a minimal amount can be added as an indirect material besides the hydrophobic synthetic resin type binder. Simultaneously, these binders also have an effect of attaching glass short fibers that have no self-adhesion ability on the fibers themselves to each other. The addition amount of the hydrophobic synthetic resin type binder is preferably from 3 to 10 parts by mass, more preferably from 4 to 7 parts by mass against 100 parts by mass of the raw material fibers. When the amount is less than 3 parts by mass, the effect of the present exemplary embodiment is not exerted, and when the amount exceeds 10 parts by mass, the resin film of the binder occludes the pores of the fiber network of the filter medium to cause problems that the pressure loss of the filter medium is increased, and the like.

Furthermore, in order to impart water repellency that is required for the filter medium in practical use, a water repellent is added in most cases. Generally, these water repellents are also mixed with a binder liquid or added solely to the filter medium as in the binder. As the water repellent, silicone type resins, fluorine type resins, waxes, alkylketene dimers, and the like are used.

Where necessary, other additives such as surfactants, anti-foaming agents, pH adjusting agents, wetting agents, water holding agents, thickening agents, crosslinking agents, mold-releasing agents, antiseptic agents, softening agents, antistatic agents, water resistant additives, plasticizers, fluorescent whitening agents, coloring pigments, coloring dyes, ultraviolet absorbers, antioxidants, fragrances and deodorants can be suitably selected and added to the binder liquid.

If either of the short fibers of hydrophobic chemical synthetic fibers and hydrophobic synthetic resin type binder is absent in the constitution of the present exemplary embodiment, the effect of the invention cannot be exerted. The reason is presumed that the short fibers of hydrophobic chemical synthetic fibers and hydrophobic synthetic resin type binder are both hydrophobic and thus the fibers and the resin type binder have good compatibility and adhere well, and the glass short fibers and the resin type binder (hydrophobic synthetic resin type binder) also adhere, whereby a great effect is exerted against internal tearing strength. In addition, since the short fibers of hydrophobic chemical synthetic fibers have a small diameter of a fiber diameter of 5 $\mu$m or less and have a large specific surface area, they promote tight adhesion among the glass short fibers-the short fibers of hydrophobic chemical synthetic fibers having a small diameter-the hydrophobic synthetic resin type binder. With respect to the effect of improving water repellency, it is presumed that the short fibers of chemical synthetic fibers strongly inhibit penetration of water since they have a small diameter and are hydrophobic. This is a phenomenon that is not observed in general chemical synthetic fibers. If the hydrophobic synthetic resin type binder is increased, a similar effect is exhibited; however, a problem is caused since the resin film of the binder occludes the pores of the fiber network in the filter medium as mentioned above. Since the short fibers of hydrophobic chemical synthetic fibers having a small diameter are fibrous, they do not cause such problem.

In the production process of the filter medium, a so-called wet papermaking process that contains dispersing fibers in water, spreading the fibers on a papermaking wire and dehydrating the fibers from under the wire to give a sheet is used. The kind of a paper machine used at this time is not limited in the present exemplary embodiment, and for example, a sheet-fed papermaking apparatus, or continuous papermaking apparatuses such as a fourdrinier paper machine, a cylinder paper machine, an inclined wire paper machine, a gap former and a delta former can be used, or a multi-ply paper machine containing one or more kinds of these paper machines may also be used. At this time, in order to obtain a filter medium for filters having higher performance, it is desirable to form a sheet uniformly with fine formation and high bulk as far as possible.

Next, a step for adding binder components to the sheeted fiber web is performed. The method for adding the binder is generally a method containing adding a binder liquid in which various components are diluted in a solvent such as water to the sheet by various methods such as impregnation, roll application, spraying and curtain coating, and removing the excess binder liquid by air of a negative pressure or positive pressure. Although the sheet before addition of the binder liquid may be in a moist state or dry state, the sheet is desirably in a moist state or semi-moist state so as to obtain a filter medium having higher performance.

The sheet to which the binder liquid has been added is dried in a drying zone. Although the drying method at this time is not specifically limited, hot air drying, drum drying, infrared ray drying and the like are preferably used. The drying temperature is desirably from 110 to 150°C.

The finished sheet is wound up by an online or offline, or cut by a cutter to become a product.


EXAMPLES


Next, the present invention is explained more specifically with referring to Examples, but the present invention is not construed to be limited by these Examples. Furthermore, unless specifically mentioned, the "part(s)" and "%" in the Examples represent "part(s) by mass" and "% by mass", re-spectively.


(Example 1)


An acidic water having a sulfuric acidic pH of 3.5 was added to 90% by mass of borosilicate glass short fibers having an average fiber diameter of 2.5 $\mu$m or less (Micro-Strand (registered trademark) Fiber Glass Micro-Fibers Type 475 manufactured by Johns-Manville Corporation) and 10% by mass of polyester short fibers each having a fiber diameter of 0.1 dtex (estimated fiber diameter: 3.0 $\mu$m) and a fiber length of 3 mm (TM04PN, manufactured by Teijin Fibers, Ltd.) to adjust the concentration to 0.5%, and these raw materials were defiberized in a mixer for foodstuffs (part number: MX-V200, manufactured by Matsushita Electric Industrial Co., Ltd.) for 1 minute. Then, the defiberized raw materials were diluted up to a concentration of 0.1% by using the same acidic water, and subjected to paper-making by using a hand-made papermaking apparatus to give a wet web. Next, a binder liquid containing a water repellent in which an acrylic type latex (trade name: Voncoat AN-155-E, manufacturer: DIC Corporation), a fluorine type water repellent (trade name: NK Guard NDN-9E, manufacturer: Nicca Chemical Co., Ltd.) had been mixed so that the solid content-mass ratio of the acrylic type latex/fluorine type water repellent became 100/8 was added to the wet web by impregnation, followed by drying by using a roll drier at 130°C to give an HEPA filter medium having a basis weight of 40 g/m$^2$ and a binder addition percentage of 5.0% by mass against the filter medium. As used herein, the borosilicate glass short fibers having an average fiber diameter of 2. 5 $\mu$m or less refers to a suitable combination of borosilicate glass short fibers having various average fiber diameters of 2. 5 $\mu$m or less so as to obtain an objective pressure loss (275 Pa in the Examples), and the same applies to the following Examples.

(Example 2)

An HEPA filter medium having a basis weight of 25 g/m$^2$ and a binder addition percentage of 5.0% by mass against the filter medium was obtained in a similar manner to Example 1, except that the composition of the fibers was 80% by mass of borosilicate glass short fibers having an average fiber diameter of 2.5 $\mu$m or less and 20% by mass of polyester short fibers each having a fiber diameter of 0.1 dtex (estimated fiber diameter: 3.0 $\mu$m) and a fiber length of 3 mm in Example 1.

(Example 3)

An HEPA filter medium having a basis weight of 25 g/m$^2$ and a binder addition percentage of 5.0% by mass against the filter medium was obtained in a similar manner to Example 1, except that the composition of the fibers was 75% by mass of borosilicate glass short fibers having an average fiber diameter of 2.5 $\mu$m or less and 25% by mass of polyester short fibers each having a fiber diameter of 0.1 dtex (estimated fiber diameter: 3.0 $\mu$m) and a fiber length of 3 mm in Example 1.

(Example 4)

An HEPA filter medium having a basis weight of 40 g/m$^2$ and a binder addition percentage of 5.0% by mass against the filter medium was obtained in a similar manner to Example 1, except that the composition of the fibers was 85% by mass of borosilicate glass short fibers having an average fiber diameter of 2.5 $\mu$m or less and 15% by mass of polyester short fibers each having a fiber diameter of 0.2 dtex (estimated fiber diameter: 4.3 $\mu$m) and a fiber length of 3 mm (TK08PN, manufactured by Teijin Fibers, Ltd.) in Example 1.

(Example 5)

An HEPA filter medium having a basis weight of 40 g/m$^2$ and a binder addition percentage of 5.0% by mass against the filter medium was obtained in a similar manner to Example 1, except that the composition of the fibers was 90% by mass of borosilicate glass short fibers having an average fiber diameter of 2.5 $\mu$m or less and 10% by mass of acrylic short fibers each having a fiber diameter of 0.1 dtex (estimated fiber diameter: 3.3 $\mu$m) and a fiber length of 3 mm (D122, manufactured by Mitsubishi Rayon Co., Ltd.) in Example 1.

(Example 6)

An HEPA filter medium having a basis weight of 40 g/m$^2$ and a binder addition percentage of 5.0% by mass against the filter medium was obtained in a similar manner to Example 1, except that the composition of the fibers was 93% by mass of borosilicate glass short fibers having an average fiber diameter of 2.5 $\mu$m or less and 7% by mass of acrylic short fibers each having a fiber diameter of 0.06 dtex (estimated fiber diameter: 2.6 $\mu$m) and a fiber length of 3 mm (a development article, manufactured by Mitsubishi Rayon Co., Ltd.) in Example 1.

(Example 7)

An HEPA filter medium having a basis weight of 50 g/m$^2$ and a binder addition percentage of 5.0% by mass against the filter medium was obtained in a similar manner to Example 1, except that the composition of the fibers was 95% by mass of borosilicate glass short fibers having an average fiber diameter of 2. 5 $\mu$m or less and 5% by mass of acrylic short fibers each having a fiber diameter of 0.1 dtex (estimated fiber diameter: 3.3 $\mu$m) and a fiber length of 3 mm in Example 1.

(Example 8)

An HEPA filter medium having a basis weight of 40 g/m$^2$ and a binder addition percentage of 5.0% by mass against the filter medium was obtained in a similar manner to Example 1, except that the composition of the fibers was 70% by mass of borosilicate glass short fibers having an average fiber diameter of 2.5 $\mu$m or less and 30% by mass of polyester short fibers each having a fiber diameter of 0.1 dtex (estimated fiber diameter: 3.0 $\mu$m) and a fiber length of 3 mm in Example 1.

(Example 9)

An HEPA filter medium having a basis weight of 25 g/m$^2$ and a binder addition percentage of 5.0% by mass against the filter medium was obtained in a similar manner to Example 1, except that the composition of the fibers was 78% by mass of borosilicate glass short fibers having an average fiber diameter or 2.5 μm or less and 22% by mass of polyester short fibers each having a fiber diameter of 0.1 dtex (estimated fiber diameter: 3.0 μm) and a fiber length of 3 mm in Example 1.

(Example 10)

An HEPA filter medium having a basis weight of 40 g/m$^2$ was obtained in a similar manner to Example 4, except that the binder addition percentage was 3.0% by mass against the filter medium in Example 4.

(Example 11)

An HEPA filter medium having a basis weight of 40 g/m$^2$ was obtained in a similar manner to Example 4, except that the binder addition percentage was 10.0% by mass against the filter medium in Example 4.

(Comparative Example 1)

An HEPA filter medium having a basis weight of 80 g/m$^2$ and a binder addition percentage of 5.0% by mass against the filter medium was obtained in a similar manner to Example 1, except that the composition of the fibers was 100% by mass of borosilicate glass short fibers having an average fiber diameter of 2.5 μm or less in Example 1.

(Comparative Example 2)

An HEPA filter medium having a basis weight of 40 g/m$^2$ and a binder addition percentage of 5.0% by mass against the filter medium was obtained in a similar manner to Example 1, except that the composition of the fibers was 100% by mass of borosilicate glass short fibers having an average fiber diameter of 2.5 μm or less in Example 1.

(Comparative Example 3)

An HEPA filter medium having a basis weight of 40 g/m$^2$ and a binder addition percentage of 5.0% by mass against the filter medium was obtained in a similar manner to Example 1, except that the composition of the fibers was 90% by mass of borosilicate glass short fibers having an average fiber diameter of 2.5 μm or less and 10% by mass of polyester short fibers each having a fiber diameter of 1.7 dtex (estimated fiber diameter: 12.5 μm) and a fiber length of 3 mm (TT04N, manufactured by Teijin Fibers, Ltd.) in Example 1.

(Comparative Example 4)

An HEPA filter medium having a basis weight of 40 g/m$^2$ and a binder addition percentage of 5.0% by mass against the filter medium was obtained in a similar manner to Example 1, except that the composition of the fibers was 90% by mass of borosilicate glass short fibers having an average fiber diameter of 2.5 μm or less and 10% by mass of polyester short fibers each having a fiber diameter of 0. 6 dtex (estimated fiber diameter: 7.4 μm) and a fiber length of 5 mm (TA04N, manufactured by Teijin Fibers, Ltd.) in Example 1.

(Comparative Example 5)

An HEPA filter medium having a basis weight of 50 g/m$^2$ and a binder addition percentage of 5.0% by mass against the filter medium was obtained in a similar manner to Example 1, except that the composition of the fibers was 97% by mass of borosilicate glass short fibers having an average fiber diameter of 2.5 μm or less and 3% by mass of acrylic short fibers each having a fiber diameter of 0.1 dtex (estimated fiber diameter: 3.3 μm) and a fiber length of 3 mm in Example 1.

(Comparative Example 6)

An HEPA filter medium having a basis weight of 40 g/m$^2$ and a binder addition percentage of 5.0% by mass against the filter medium was obtained in a similar manner to Example 1, except that the composition of the fibers was 65% by mass of borosilicate glass short fibers having an average fiber diameter of 2. 5 $\mu$m or less and 35% by mass of acrylic short fibers each having a fiber diameter of 0.1 dtex (estimated fiber diameter: 3.3 $\mu$m) and a fiber length of 3 mm in Example 1.

(Comparative Example 7)

An acidic water having a sulfuric acidic pH of 3.5 was added to 90% by mass of borosilicate glass short fibers having an average fiber diameter of 2.5 $\mu$m or less, 10% by mass of acrylic short fibers each having a fiber diameter of 0.1 dtex (estimated fiber diameter: 3.3 $\mu$m) and a fiber length of 3 mm, and 4% by mass against the filter medium of PVA binder fibers (Fibribond, manufactured by Sansho Co., Ltd., No. 243) to adjust the concentration to 0.5%, and these raw materials were defiberized in a mixer for foodstuffs (part number: MX-V200, manufactured by Matsushita Electric Industrial Co., Ltd.) for 1 minute. Then, the defiberized raw materials were diluted up to a concentration of 0.1% by using the same acidic water, and subjected to paper-making by using a hand-made papermaking apparatus to give a wet web. Next, an impregnation liquid containing only a fluorine type water repellent (trade name: NK Guard NDN-9E, manufacturer: Nicca Chemical Co., Ltd.) was added to the wet web by impregnation so as to have an addition percentage against the filter medium of 0.4% by mass, followed by drying by using a roll drier at 130°C to give an HEPA filter medium having a basis weight of 40 g/m$^2$ and a binder addition percentage of 4.4% by mass against the filter medium.

(Comparative Example 8)

An HEPA filter medium having a basis weight of 40 g/m$^2$ and a binder addition percentage of 4.4% by mass against the filter medium was obtained in a similar manner to Comparative Example 7, except that the composition of the fibers was 90% by mass of borosilicate glass short fibers having an average fiber diameter of 2. 5 $\mu$m or less and 10% by mass of vinylon short fibers each having a fiber diameter of 0. 6 dtex (estimated fiber diameter: 7.7 $\mu$m) and a fiber length of 3 mm (VPB053, manufactured by Kuraray Co., Ltd.) in Comparative Example 7.

(Comparative Example 9)

An HEPA filter medium having a basis weight of 40 g/m$^2$ was obtained in a similar manner to Example 4, except that the binder addition percentage was 2.0% by mass against the filter medium in Example 4.

(Comparative Example 10)

An HEPA filter medium having a basis weight of 40 g/m$^2$ was obtained in a similar manner to Example 4, except that the binder addition percentage was 11.0% by mass against the filter medium in Example 4.

The following tests were performed on the filter media of the Examples and Comparative Examples.

(1) Pressure loss

Using a self-making apparatus, the pressure loss when air was passed through the filter medium having an effective surface area of 100 cm$^2$ at a surface wind velocity of 5.3 cm/sec was measured by using a differential pressure gauge.

(2) 0.3-0.4 $\mu$m DOP penetration

Air containing polydispersed DOP particles that was generated at a Laskin nozzle was passed through a filter medium having an effective surface area of 100 cm$^2$ at a surface wind velocity of 5.3 cm/sec, and the penetration of DOP at that time was measured from the ratio of numbers of the particles at the upper stream and downstream by using a laser particle counter manufactured by Rion Co., Ltd. The objective particle size was from 0.3 to 0.4 $\mu$m.

(3) PF value

The PF value used as' an index of the filter performance of the filter medium was obtained by the following mathematical formula 1 by using the data in (1) and (2). The higher the PF value is, the lower the permeability is under the same pressure loss, or the lower the pressure loss is under the same permeability.

[Mathematical Formula 1]

$$\text{PF value} = \frac{\log_{10}\left(\text{DOP penetration }[\%]/100\right)}{\text{Pressure loss }[\text{Pa}]/9.81} \times (-100)$$

(4) Internal tearing strength

Test pieces each having a length of 63 mm and a width of 76 mm were collected from the filter medium, and five test pieces were superposed and measured by using an automatic digital-type Elmendorf tear tester (Kumagai Riki Kogyo Co., Ltd.).
Furthermore, a tear index was obtained by dividing the internal tearing strength by the basis weight.

(5) Tensile strength

A test piece that was cut into 1 inch in width×130 mm in length was collected from the filter medium, and measured at a span length of 100 mm and a tensile velocity of 15 mm/min by using a constant rate tensile tester (Toyo Seiki Seisaku-sho, Ltd.; Strograph M1).

(6) Water repellency

Water repellency was measured in accordance with MIL-STD-282.

(7) Flame retardancy

Flame retardancy was measured by using an inflammability tester complying with the Guidance of Combustion Test Methods on Filter Media for Air Cleaning Apparatuses JACA No.11A-2003 (Suga Test Instruments Co., Ltd.; UL-94HBF). The evaluation was made as follows: those satisfied the combustion classification class 3 were evaluated as O, and others were evaluated as ×.
The measurement results of these tests are shown in Table 1 and Table 2.

[Table 1]

| | | Example1 | Example2 | Example3 | Example4 | Example5 | Example6 | Example7 | Example8 | Example9 | Example10 | Example11 |
|---|---|---|---|---|---|---|---|---|---|---|---|---|
| Gbss short fibers | | 90% by mass | 80% by mass | 75% by mass | 85% by mass | 90% by mass | 93% by mass | 95% by mass | 70% by mass | 78% by mass | 85% by mass | 85% by mass |
| Short fibers of chemical synthetic fibers | | Polyester fibers0.1dtex 10% by mass | Polyester fibers0.1dtex 20% by mass | Polyester fibers0.1dtex 26% by mass | Polyester fibers 02 dtex 16% by mass | Acrylic fibers 0.1dtex 10% by mass | Acrylic fibers0.05dtex 7% by mass | Acrylic fibers0.1dtex 8% by mass | Polyester fibers0.1dtex 80% by mass | Polyester fibers0.1dtex 22% by mass | Polyester fibers02dtex 15% by mass | Polyester fibers0.2dtex 15% by mass |
| Binder | | Acrylic resin binder 5% by mass against filter medium | Acrylic resin binder 5% by mass against filter medium | Acrylic resin binder 5% by mass against filter medium | Acrylic resin binder 6% by mass agains filter medium | Acryli resin binder 6% by mass against filter medium | Acrylic resin binder 6% by mass against filter medium | Acrylic resin binder 5% by mass against filter medium | Acrylic resin binder 5% by mass against filter medium | Acrylic resin binder 5% by mass against filter medium | Acrylic resin binder 5% by mass against filter medium | Acrylic resin binder 10% by mass against filter medium |
| Water repellant | | Used | Used | Used | Used | Used | Used | Used | Used | Used | Used | Used |
| Basis weight | g/m$^2$ | 40 | 25 | 25 | 40 | 40 | 40 | 50 | 40 | 25 | 40 | 40 |
| Internal tearing strength | mN | 490 | 380 | 400 | 430 | 450 | 430 | 390 | 660 | 400 | 380 | 440 |
| Tear Index | mN·m$^2$/g | 12.3 | 152 | 16.0 | 10.8 | 11.3 | 10.8 | 7.8 | 16.5 | 16.0 | 8.5 | 11.0 |
| Tensite strength stmngth | kN/m | 0.58 | 062 | 0.65 | 062 | 058 | 063 | 055 | 0.70 | 0.64 | 0.52 | 0.10 |
| Water repellency repelbney | mm(H$_2$O) | 640 | 670 | 730 | 650 | 630 | 580 | 560 | 760 | 680 | 570 | 690 |
| Pressure loss | Pe | 277 | 277 | 274 | 276 | 275 | 278 | 272 | 274 | 273 | 275 | 274 |
| 0.3-0.4$\mu$m DOP penetration | % | 0.022 | 0.020 | 0.026 | 0.022 | 0023 | 0.020 | 0.024 | 0.029 | 0.021 | 0.019 | 0.029 |

14

| | | Example1 | Example2 | Example3 | Example4 | Example5 | Example6 | Example7 | Example8 | Example9 | Example10 | Example11 |
|---|---|---|---|---|---|---|---|---|---|---|---|---|
| PF value | | 12.25 | 13.10 | 12.84 | 13.00 | 12.98 | 13.05 | 13.06 | 12.67 | 13.22 | 1327 | 12.67 |
| Flame re-tardancy | | ○ | ○ | × | ○ | ○ | ○ | ○ | × | ○ | ○ | ○ |

EP 2 422 866 B1

[Table 2]

| | | Comparative Example1 | Comparative Example2 | Comparative Example3 | Comparative Example4 | Cmparative Example5 | Comparative Example6 | Comparative Example7 | Comparative Example8 | Comparative Example9 | Comparative Example10 |
|---|---|---|---|---|---|---|---|---|---|---|---|
| Glass short fibers | | 100% by mass | 100% by mass | 90% by mass | 90% by mass | 97% by mass | 65% by mass | 90% by mass | 90% by mass | 85% by mass | 85% by mass |
| short fibers of chemical synthetic fibers | | Not used | Not used | Polyester fibers 1,7dtex 10% by mass | Polyester fibers 0.6dtex 10% by mass | Acrylic fibers 0.1dtex 8% by mass | Acrylic fibers 0.1dtex 35% by mass | Acrylic fibers 0.1dtex 10% by mass | Vinylon fibers0.6dtex 10% by mass | Polyester fibers0.2dtex 15% by mass | Polyester fibers0.2dtex 15% by mass |
| Binder | | Acrylic resin binder 6% by mass against filter medium | Acrylic resin binder 5% by mass against filter medium | Acrylic resin binder 5% by mass against filter medium | Acrylic resin binder 5% by mass against filter medium | Acrylic resin binder 5% by mass against filter medium | Acrylic resin binder 5% by mass against filter medium | PVA binder 4% by mass against filter medium | PVA binder 4% by mass against filter medium | Acrylic resin binder 2% by mass against filter medium | Acrylic resin binder 11% by mass against filter medium |
| Water repelfam | | Used | Used | Used | Used | Used | Used | Used | Used | Used | Used |
| Basis weight | $g/m^2$ | 80 | 40 | 40 | 40 | 50 | 40 | 40 | 40 | 40 | 40 |
| Internal tearing strength | mN | 420 | 190 | 230 | 260 | 310 | 650 | 270 | 190 | 270 | 430 |
| Tear index | $mN \cdot m^2/g$ | 53 | 4.8 | 5.8 | 65 | 62 | 16.3 | 6.8 | 4.8 | 6.8 | 10.8 |
| Tensile strength | kN/m | 0.98 | 053 | 0.63 | 0.68 | 0.67 | 0.70 | 0.68 | 0.72 | 0.40 | 0.73 |
| Water repellency | $mm(H_2O)$ | 710 | 430 | 400 | 470 | 500 | 660 | 360 | 310 | 410 | 700 |
| Pressure loss | Pa | 276 | 277 | 280 | 276 | 276 | 274 | 276 | 276 | 276 | 275 |
| $0.3-0.4\mu m$ DOP penetration | % | 0.023 | 0.021 | 0.025 | 0.021 | 0.022 | 0.043 | 0.020 | 0.020 | 0.018 | 0.044 |
| PF value | | 12.93 | 13.02 | 12.62 | 13.07 | 13.00 | 12.06 | 13.15 | 13.15 | 1331 | 11.97 |
| Flame retardancy | | ○ | ○ | ○ | ○ | ○ | × | ○ | ○ | ○ | ○ |

EP 2 422 866 B1

Comparative Example 1 corresponds to a conventional example, and Comparative Example 2 is an example obtained by simply decreasing by half the basis weight of the Comparative Example; in Comparative Examples 1 and 2, as a result of decrease by half in the basis weight from 80 g/m$^2$ to 40 g/m$^2$, the internal tearing strength, tensile strength and water repellency were decreased significantly. On the other hand, in Examples 1 and 5, as a result of incorporation of the polyester short fibers or acrylic short fibers of 0.1 dtex each by 10% by mass, internal tearing strength and water repellency of the degrees that were equal to or more than those under a basis weight of 80 g/m$^2$ in Comparative Example 1 could be achieved even under a basis weight of 40 g/m$^2$. However, the effect of improving tensile strength is small, but no problem is caused in the processing property of the filter medium at this degree. In Examples 4 and 6, similar effects were observed by carrying out with varying the fiber diameter and incorporation percentage. On the other hand, in Comparative Examples 3 and 4 in which short fibers of chemical synthetic fibers each having a fiber diameter of more than 5 $\mu$m were incorporated, the internal tearing strength and water repellency were improved little. In Examples 2 and 3, as a result of increase in the incorporation of the 0.1 dtex polyester short fibers, the internal tearing strength and water repellency were not of problematic degrees even the basis weight was decreased to 25 g/m$^2$. However, the flame retardancy was deteriorated when the incorporation percentage of the short fibers of chemical synthetic fibers exceeded 22% by mass as in Examples 3 and 8. As is apparent from Example 9, it was found that it was necessary to adjust the incorporation percentage of the short fibers of chemical synthetic fibers to 22% by mass or less in an application in which flame retardancy is required. Furthermore, as is apparent from Example 8, when the incorporation percentage was 30% by mass of the short fibers of chemical synthetic fibers, the DOP penetration and PF value were at acceptable degrees, whereas when the incorporation percentage exceeded 30% by mass of the short fibers of chemical synthetic fibers as in Comparative Example 6, increase in the DOP penetration and the decrease in the PF value were observed. Conversely, the effect was sufficient in Example 7 in which the incorporation percentage of the short fibers of chemical synthetic fibers was decreased to 5% by mass, whereas the internal tearing strength and water repellency were decreased in Comparative Example 5 in which the incorporation percentage was further decreased to 3% by mass. The internal tearing strength and water repellency were significantly decreased in Comparative Example 7 in which the binder was changed to hydrophilic polyvinyl alcohol (PVA) binder fibers, and the internal tearing strength and water repellency were further decreased in Comparative Example 8 by changing the short fibers of chemical synthetic fibers to hydrophilic 0.6 dtex vinylon fibers besides the binder. It is considered that the hydrophilic short fibers of chemical synthetic fibers and binder have little effect on improvement of the internal tearing strength but conversely decrease the water repellency. Comparative Example 9 in which the acrylic resin binder was 2% by mass against the filter medium was inferior to Example 10 in which the acrylic resin binder was 3% by mass against the filter medium in internal tearing strength, tensile strength and water repellency. Increase in the DOP penetration and the decrease in the PF value were observed in Comparative Example 10 in which the acrylic resin binder was 11% by mass against the filter medium, as compared to Example 11 in which the acrylic resin binder was 10% by mass against the filter medium.

## Claims

1. A low-basis-weight filter medium for air filters, comprising:

   glass short fibers (A) and short fibers of hydrophobic chemical synthetic fibers each having a fiber diameter of 5 $\mu$m or less (B) by a mass ratio (A/B) in the range of from 70/30 to 95/5, as raw material fibers of the filter medium; a hydrophobic synthetic resin-based binder is added by 3 to 10 parts by mass with respect to 100 parts by mass of the raw material fibers; and a basis weight of from 25 g/m$^2$ or more to 50 g/m$^2$ or less.

2. The low-basis-weight filter medium for air filters according to claim 1, wherein the mass ratio (A/B) is in the range of from 78/22 to 95/5, and the filter medium for air filters satisfies the combustion classification class 3 of a combustion test that conforms with the Guidance of Combustion Test Methods on Filter Media for Air Cleaning Apparatuses JACA No. 11A-2003.

3. The low-basis-weight filter medium according to claim 1 or 2, wherein a water repellent is added to the filter medium for air filters.

## Patentansprüche

1. Filtermedium mit niedrigem Flächengewicht für Luftfilter, mit:

Glas-Kurzfasern (A) und Kurzfasern (B) aus hydrophoben chemischen Synthesefasern, die jeweils einen Faserdurchmesser von 5 μm oder weniger haben, in einem Massenverhältnis (A/B) im Bereich von 70/30 bis 95/5 als Rohmaterialfasern des Filtermediums,
wobei 100 Massenanteilen der Rohmaterialfasern 3 bis 10 Massenanteile eines hydrophoben Bindemittels auf Kunstharzbasis beigemischt sind, und
wobei das Filtermedium ein Flächengewicht von 25 g/m$^2$ oder mehr bis 50 g/m$^2$ oder weniger aufweist.

2. Filtermedium nach Anspruch 1,
wobei das Massenverhältnis (A/B) im Bereich von 78/22 bis 95/5 liegt, und wobei das Filtermedium für Luftfilter der Verbrennungsklassifizierungsklasse 3 eines Verbrennungstest genügt, der die Richtlinien für Verbrennungstestverfahren für Filtermedien für Luftreinigungsvorrichtungen (Guidance of Combustion Test Methods on Filter Media for Air Cleaning Apparatuses) JACA Nr. 11A-2003 erfüllt.

3. Filtermedium nach Anspruch 1 oder 2,
wobei dem Filtermedium für Luftfilter ein wasserabweisendes Mittel zugesetzt ist.

**Revendications**

1. Milieu filtrant à faible grammage pour filtres à air, comprenant :

des fibres de verre (A) courtes et des fibres courtes de fibres chimiques synthétiques, ayant, chacune, un diamètre de fibre de 5 μm ou moins (B) dans un rapport de poids (A/B) dans une gamme à partir de 70/30 jusqu'à 95/5, servant de fibres du matériau brut du milieu filtrant ;
un liant à base de résine synthétique hydrophobe est ajouté à raison de 3 à 10 parties en poids par rapport à 100 parties en poids de fibres en matériau brut ; et
un grammage à partir de 25 g/m$^2$ ou plus jusqu'à 50 g/m$^2$ ou moins.

2. Milieu filtrant à faible grammage pour filtres à air selon la revendication 1,
dans lequel le rapport des poids (A/B) se situe dans une gamme à partir de 78/22 jusqu'à 95/5, et le milieu filtrant pour filtres à air satisfait à la classe 3 de la classification relative à la combustion d'un test de combustion qui est conforme au Guide des Méthodes de test de combustion concernant les Milieux Filtrants pour les Appareillages de Purification d'Air JACA (Japan Air Cleaning Association) N° 11A-2003.

3. Milieu filtrant à faible grammage pour filtres à air selon les revendications 1 ou 2,
dans lequel un produit hydrofuge est ajouté au milieu filtrant pour les filtres à air.

**EP 2 422 866 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H0820641 B
- JP H060013082 B
- JP 08243321 A
- JP H09225226 B
- JP H0241499 B
- JP S6290395 B
- WO 026005 A
- JP 2007029916 B